# EUROPEAN PATENT APPLICATION

(11) **EP 4 654 307 A1**
(43) Date of publication of application: **26.11.2025**
(21) Application number: 24177865.3
(22) Date of filing: 24.05.2024
(51) Int. Cl.: H01M 10/04, H01M 4/78, H01M 10/0587

(54) **A BATTERY COMPRISING ONE OR MORE FOLDED ELECTRODES**

(71) Applicant: Renata AG, 4452 Itingen (CH)
(72) Inventor: HAERING, Pascal, 4147 Aesch (CH); WANG, Xiaojun, 4455 Zunzgen (CH); MAIRE, Pascal, 4410 Liestal (CH); EL BARADAI, Oussama, 4057 Basel (CH); WU, Han, Pembroke Pines, 33029 (US)
(74) Representative: ICB SA

(57) **Abstract**

The electrode assembly comprises electrodes (2, 3) in the form of coated foils, wherein at least one of said electrodes is folded along one or more folding lines (15a-15d, 35), and wherein said at least one electrode comprises one or more arrays of apertures (21) arranged respectively along said one or more folding lines. The apertures are configured in terms of their shape, number and dimensions so that stress buildup in the vicinity of the folding lines is mitigated, thereby reducing the risk of rupturing and/or breaking the foils and the coatings provided thereon.

## Description

The present invention is related to batteries, in particular to batteries comprising electrodes assembled by a technique that involves folding one or more coated foil-type electrodes along one or more folding lines.

### State of the art.

A battery cell comprises electrodes, typically termed the anode and cathode of the battery. In most commonly used batteries, the electrodes are provided in the form of coated foils, comprising a current collector foil with a coating of active materials attached thereto, and separated by a separator sheet. One widespread fabrication technique for producing an electrode/separator assembly consists of winding a stack of electrode layers and separator sheets onto a mandrel to obtain a cylindrical so-called 'jellyroll' assembly which can be inserted into a metal container together with an electrolyte, while the current collectors of the assembly are welded to the positive and negative contacts of the container.

To produce planar batteries, the jellyroll may be flattened after removing if from the mandrel, so that a flattened jellyroll is obtained, to be subsequently inserted in a rectangular container, or integrated in an aluminium laminate pouch to obtain a flexible battery.

The flattening of the jellyroll and in general the folding of a coated foil-type electrode results in increased tension at the folding line, leading to potential damage of the electrode at or near the folding line. This can result in faulty batteries due to shorting paths between the electrodes or other malfunctions.

### Summary of the invention

The invention is related to an electrode assembly for a battery and to the battery as such, in accordance with the appended claims. The electrode assembly comprises electrodes in the form of coated foils, wherein at least one of said electrodes is folded along one or more folding lines, and wherein said at least one electrode comprises one or more arrays of apertures aligned respectively along said one or more folding lines, so that the apertures of an array intersect with the folding line along which the apertures are aligned. The apertures are configured in terms of their shape, number and dimensions so that stress buildup in the vicinity of the folding lines is mitigated, thereby reducing the risk of rupturing and/or breaking the foils and the coatings provided thereon.

### Brief description of the figures

Figure 1 illustrates an electrode stack as known in the art, suitable for producing a battery electrode assembly by the winding technique.
Figure 2 is a more detailed view of the components of the stack shown in Figure 1.
Figure 3 illustrates the winding of the stack onto a mandrel.
Figure 4 illustrates the result of flattening the wound-up stack to obtain an electrode assembly in the shape of a flattened jelly-roll.
Figure 5 shows a detail of one lateral area of the flattened jelly-roll.
Figure 6 shows a plane view of an electrode stack applicable for producing an electrode assembly according to an embodiment of the invention, wherein the stack is provided with multiple linear arrays of apertures.
Figure 7 shows a detail of the plane view shown in Figure 6, together with a section view through one of the apertures.
Figure 8 shows a flattened jelly-roll assembly obtained from the stack illustrated in Figures 6 and 7.
Figure 9 illustrates an embodiment wherein an electrode coating is removed locally between adjacent apertures.
Figures 10 and 11 illustrate an embodiment comprising additional arrays of apertures arranged to obtain additional folding lines in the flattened jelly-roll assembly.
Figures 12 and 13 illustrate an assembly for an ultra-thin battery, wherein one electrode is provided with apertures along the folding line of said electrode.

### Detailed description of embodiments of the invention

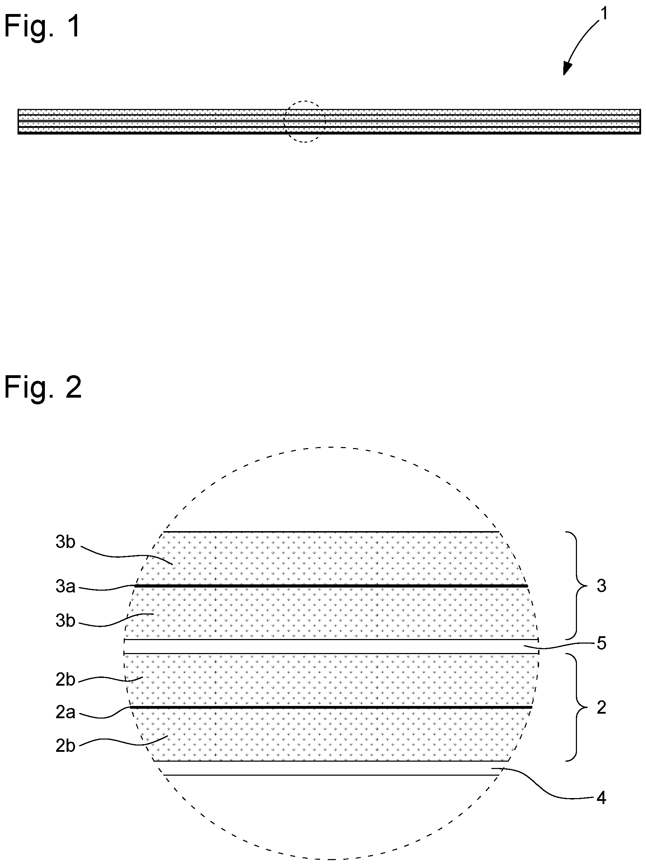

The problems related to the prior art will first be described in some more detail. Figure 1 illustrates an electrode stack 1 suitable for producing an electrode assembly of a battery by using a winding technique. As shown in more detail in Figure 2, the stack includes a first electrode 2, a second electrode 3 and two separator sheets 4 and 5. We will refer to the first electrode as the anode 2 and the second electrode as the cathode 3, but the inverse is possible as well. Each electrode comprises a current collector in the form of a metal foil, and active coating layers on both sides of the metal foil. The anode 2 thus comprises the anode current collector 2a and anode coatings 2b, while the cathode 3 comprises the cathode current collector 3a and cathode coatings 3b. By way of example, the following dimensions may be applicable: the thickness of the current collector foils may be in the order of 10 µm. The thickness of each coating 2b, 3b may be in the order of 50 µm, while the thickness of the separator sheets 4 and 5 may be in the order of 20 µm, so that the thickness of the complete stack may be in the order of 260 µm. These dimensions are purely exemplary and not intended to limit the scope of the present invention.

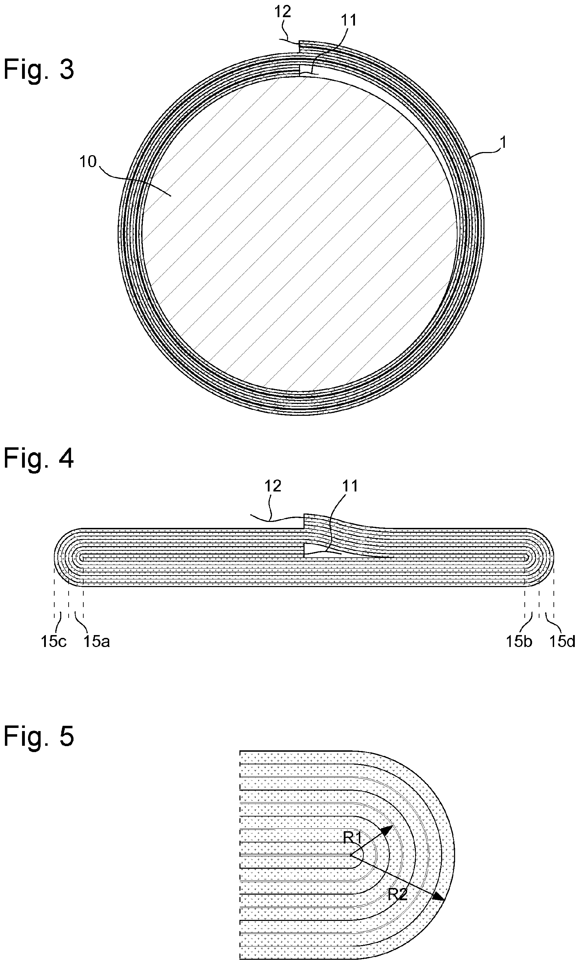

With reference to Figure 3, the stack is wound onto a cylindrical mandrel 10. Figure 3 is a schematic representation of the winding technique and not intended to represent a realistic embodiment. The diameter of the mandrel 10 as represented in the drawing is smaller relative to the thickness of the stack 1 than would be the case in reality, in order to visualize the windings. For the same reason, the number of windings represented in Figure 3 is smaller than would be the case in reality. Only two full-circle windings are shown in the schematic representation.

The stack 1 is wound onto the mandrel 10 to obtain a so-called jelly-roll wherein the separator sheets 4 and 5 isolate consecutive windings of the anode 2 and the cathode 3. As shown in the drawing, an anode tab 11 and a cathode tab 12 extend out from the extremities of the stack. The tabs may be integral portions of the respective metal foils, or they may be separate pieces of metal foil fixed to said foils by welding for example.

Reference is then made to Figure 4, representing the effect of flattening the jelly-roll after removing it from the mandrel 10. It is seen that the stack is folded along laterally placed folding lines. The two windings represented in Figure 3 result in two inner folding lines 15a, 15b and two outer folding lines 15c, 15d. The folding lines are characterized by folding line radii R1 and R2 of the folded stack at the folding line locations, as indicated in the detail image in Figure 5. Individual layers of the stack are characterized by individual folding radii at each folding line location. It is clear that especially at the inner folding line locations 15a and 15b, the folding radii are small, which can lead to high local tension and potential rupturing of the current collectors 2a and 3a. Also, the electrode coatings 2b, 3b may crumble under the pressure at these locations and release conductive debris inside the jellyroll, resulting in local short circuits of the battery. Furthermore, these loose pieces may create bumps along the folding line, which may puncture the separator sheets 4 and 5 and lead to short circuits of the battery.

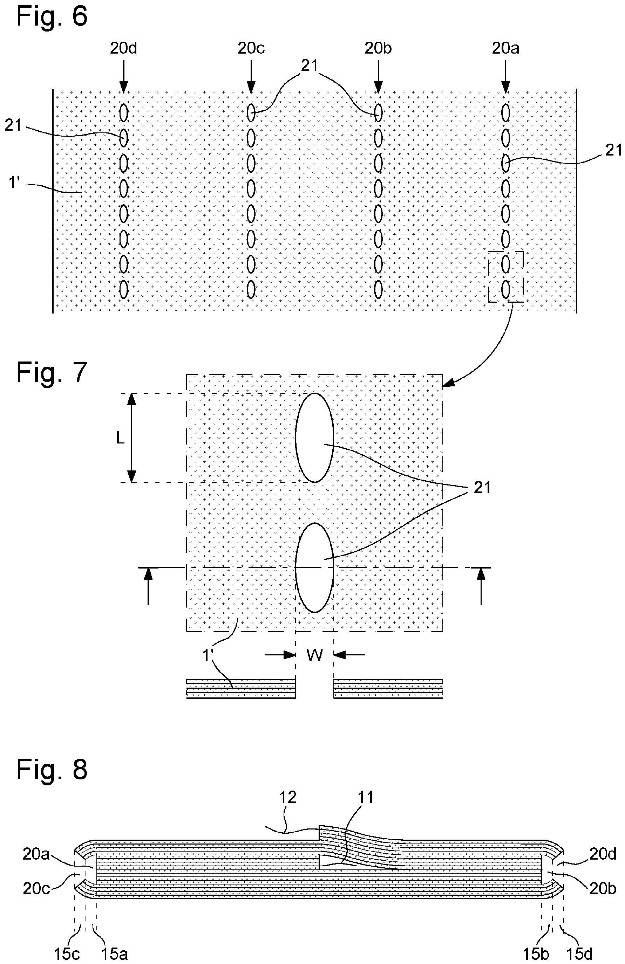

Figure 6 is a plane view of an electrode stack 1' applicable in an embodiment according to the invention. The constituent layers of the stack 1' are the same as the layers shown in Figure 1. It is seen that the stack is provided with four linear arrays 20a to 20d of equally spaced ellipse-shaped apertures 21. A detail of the apertures is shown in plane view and in a corresponding cross-section view in Figure 7, taken along a cross-section plane that passes centrally through one aperture 21. The arrays 20a-20d of apertures are aligned respectively along the folding lines 15a to 15d of the eventual flattened jelly-roll. Therefore, when the electrode is wound onto a mandrel and flattened in the manner described above, the arrays of apertures 20a-20d coincide respectively with the four consecutive folding lines 15a-15d of the flattened jelly-roll, as illustrated in Figure 8.

In the areas corresponding to the apertures 21, the folding line does not exhibit the folding diameters indicated in Figure 5, hence the tension-related problems are mitigated in these areas. In the areas between adjacent apertures 21 along each folding line, the stack is still folded in the manner shown in Figures 4 and 5, but these areas are small and localized, and the risk of rupturing the current collectors and/or breaking up the electrode coatings is thereby reduced accordingly.

Preferably, the sum of the lengths L (as indicated in Figure 7) of the apertures 21 of an array of apertures, as measured in the direction of the corresponding folding line, represents more than 50 % of the length of the folding line itself. More preferably, said percentage of the aperture lengths with respect to the folding line length is between 70 % and 95 %.

The shape of the apertures 21 is not limited to the represented ellipse-shape and other shapes are possible, although it is preferred to avoid shapes which include sharp angles.

In the embodiment shown, the width W (as indicated in Figure 7) of the apertures 21 in the direction perpendicular to the folding line is about twice the thickness of the electrode stack 1', which is beneficial for obtaining a folded stack having minimal stress in the areas between adjacent apertures. However, said width W may be smaller or larger to some degree (relative to the thickness of the stack 1') without losing the essential benefit of the invention, which is to reduce the risk of damaging the electrodes in the vicinity of the folding lines. In general, said width W of the apertures, regardless of the shape of the apertures, and applied either in an electrode stack or in an individual coated foil-type electrode, is preferably higher than the thickness of said stack or of said individual electrode.

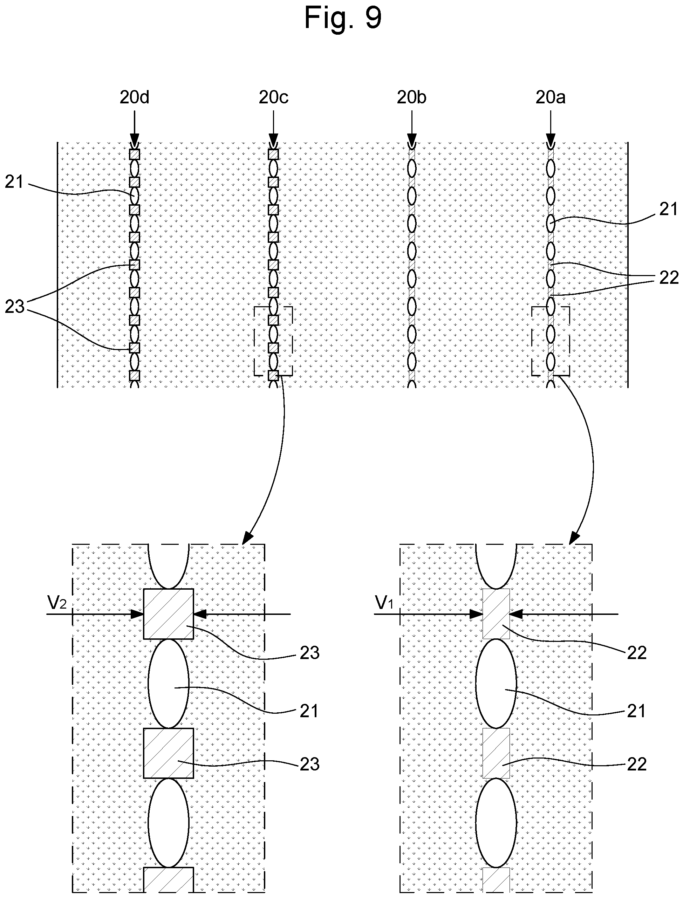

In Figure 8 it is seen that at the location of the outer folding lines 15c, 15d, the apertures 20c, 20d may become stretched due to the fact that the folding radius has increased compared to the folding radius of the inner folding lines 15a, 15b. When the number of windings increases, this stretching effect will be further enhanced, and the risk of rupturing the stack in the areas between adjacent apertures may become higher. This could be solved by providing progressively wider apertures as the windings progress from the centre of the jellyroll to the edges. Alternatively or in combination with the latter solution, the electrode coating 3b at the top of the stack (see Figure 2) may be removed locally in the areas between adjacent apertures 21 in one or more of the arrays of apertures. Such local removal of the coating can be done by laser ablation, and this will also mitigate the issue of stretching the apertures in the vicinity of the folding lines. According to a preferred embodiment illustrated in Figure 9, the width of the areas in which the coating is removed increases as a function of the folding radius. In the arrays 20a and 20b corresponding to the inner folding lines 15a and 15b, the coating is removed in areas 22, having width V₁ in the direction perpendicular to the array, while in the arrays 20c and 20d corresponding to the outer folding lines 15c and 15d, the coating is removed in areas 23 having width V₂, with V₂ >V₁.

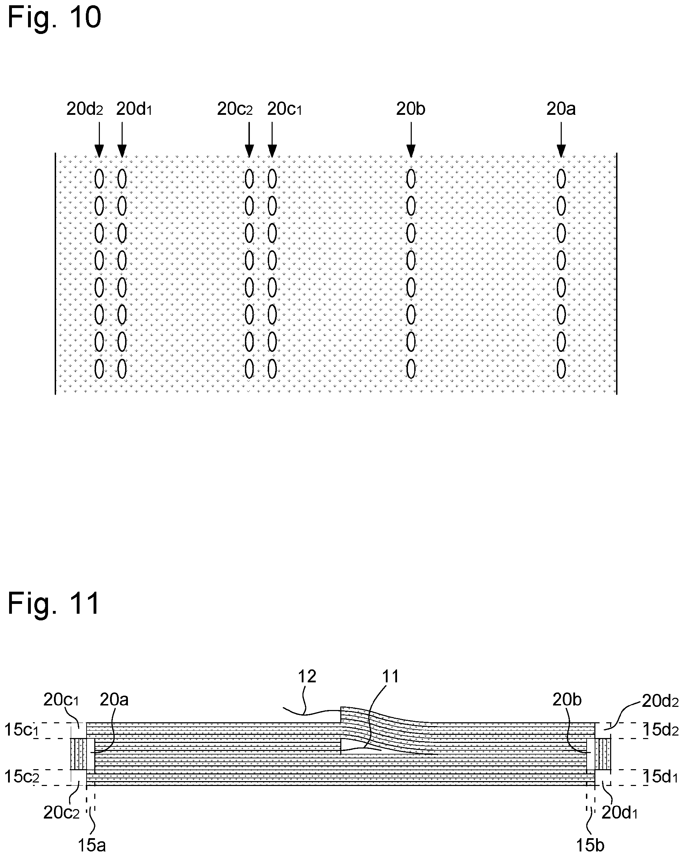

Another way of mitigating the issue of the stretching of the apertures is illustrated by the embodiment shown schematically in Figures 10 and 11. It is seen that the third and fourth array of apertures 20c, 20d are now each replaced by two closely spaced arrays: 20c₁, 20c₂ and 20d₁, 20d₂. The spacing and location of these arrays is chosen in relation to the thickness of the flattened jellyroll, as illustrated in Figure 11: the apertures are located to enable the formation of two adjacent folding lines in each of the lateral areas of the jelly-roll: lines 15c₁, 15c₂ at one side of the jelly-roll and lines 15d₁, 15d₂ at the opposite side. As these folding lines are now formed between portions of the stack which are oriented at a right angle instead of at an angle of 180°, stretching of the individual apertures is mitigated. By providing additional pairs of appropriately spaced aperture arrays, this effect can be extended to additional windings. This embodiment therefore provides more precise control of the location of the folding lines, and results in even and uniform current distribution along the electrode surfaces and longer life of the battery.

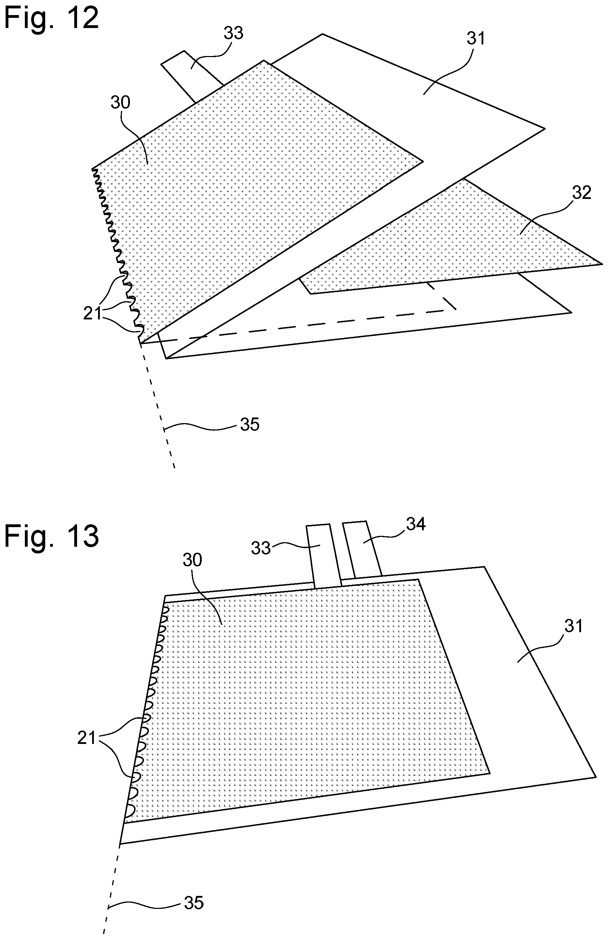

The flattened jelly-roll electrode assembly is one example of an assembly including folded electrodes. Folded electrodes also appear in other configurations, and the invention can be applied there as well. An example thereof is shown in Figures 12 and 13. This is an electrode assembly for an ultrathin battery, comprising a folded anode 30, a folded separator sheet 31, and a non-folded cathode 32 inserted between the folded portions of the anode and the separator sheet. Figure 12 shows the components prior to assembly, while Figure 13 shows the folded assembly, with non-coated anode and cathode tabs 33, 34 extending out of said assembly. It is seen that the anode 30 is provided with an array of apertures 21 arranged along the folding line 35, with the same benefit as described above for the jellyroll-type assemblies. In this embodiment also, the anode coating could be removed locally in areas between adjacent apertures 21, in the manner illustrated in Figure 9.

The apertures can be produced by various techniques, for example by physically puncturing the electrode or electrode stack, or by using laser cutting techniques, the latter being preferred due to the possibility of high speed and flexibility of the production process. Laser technology is also applicable for other purposes apart from cutting out the apertures, such as for locally removing the coating in the embodiments illustrated on the basis of Figure 9.

It is preferred that following the creation of the apertures, the electrode or electrode stack is cleaned, to remove debris from the vicinity of the apertures. This will guarantee clean electrodes that do not contaminate the electrode assembly during the production process of said assembly.

Preferably, every folding line of the assembly is provided with apertures as described above. However, the invention also includes embodiments wherein only one or more but not all of the folding lines are provided with said apertures.

The invention is applicable to rechargeable as well as non-rechargeable planar batteries of any realistically realizable dimensions. Any electrode assembly comprising folded electrodes with apertures along one or more of the folding lines may be further handled to form a battery according to known methods, for example by inserting the assembly in a battery container with the tabs connected respectively to a cup and lid of the container, or by integrating the assembly in a laminate pouch.

## Claims

1. An electrode assembly for a battery, comprising electrodes (2, 3) in the form of coated foils, wherein at least one of said electrodes is folded along one or more folding lines (15a-15d, 35), **characterized in that** said at least one electrode comprises one or more arrays of apertures (21), wherein said arrays are aligned respectively along said one or more folding lines.

2. An electrode assembly according to claim 1, comprising a stack (1') that includes a first and a second electrode (2, 3), the stack further comprising separator sheets (4, 5) for electrically isolating the first and second electrodes from each other, wherein the stack is wound in the manner of a flattened jelly-roll comprising folding lines (15a-15d) at opposite lateral ends of said flattened jelly-roll, and comprising at least one of said arrays of apertures (21) along one of said folding lines, said apertures passing through both electrodes and through the separator sheets of the stack.

3. An electrode assembly according to claim 1 or 2, wherein the apertures (21) arranged along at least one folding line are ellipse-shaped, having a short axis and a long axis, wherein the long axes of said apertures are aligned along said at least one folding line.

4. An electrode assembly according to any one of the preceding claims, wherein the width (W) of the apertures (21) as measured perpendicularly to said one or more folding lines, is equal to or greater than the thickness of the one or more folded electrodes folded along said one or more folding lines.

5. An electrode assembly according to any one of the preceding claims, wherein the sum of the lengths of the apertures arranged along at least one folding line, as measured in the direction of said folding line, is between 70 % and 95 % of the length of said folding line.

6. An electrode assembly according to any one of the preceding claims, wherein an electrode coating (3b) of said at least one electrode is removed locally in areas (22, 23) between adjacent apertures (21) of at least one of said one or more arrays of apertures.

7. An electrode assembly according to claim 6, wherein said electrode is folded along multiple folding lines (15a-15d) having increasing folding radii, and wherein the width of said areas (22, 23) where the coating is locally removed in the arrays (20a-20d) of apertures (21) corresponding to said multiple folding lines, said width being measured in a direction perpendicular to the respective folding lines, increases as a function of the folding radius of the folding lines.

8. A battery comprising an electrode assembly according to any one of the preceding claims.
